# EUROPEAN PATENT APPLICATION

(11) **EP 2 999 069 A1**
(43) Date of publication of application: **23.03.2016**
(21) Application number: 14185738.3
(22) Date of filing: 22.09.2014
(51) Int. Cl.: H02G 1/08, H02G 11/00

(54) **A mounting aid arrangement and a method for mounting a robot cable harness**

(71) Applicant: ABB Technology Ltd, 8050 Zürich (CH)
(72) Inventor: Barkman, Lars, 725 97 Västerås (SE); Lindevall, Mattias, 722 46 Västerås (SE)
(74) Representative: Savela, Reino Aleksi

(57) **Abstract**

A mounting aid arrangement (10) for mounting a robot cable harness, which arrangement comprises a pulling wire (12) provided with an attachment device (16; 26) at a first end thereof for attachment to the robot cable harness. It further comprises a protection hose (14) attachable to the pulling wire (12) and adapted to surround the Robot cable harness. Also described is a method for mounting a robot cable harness inside a hollow part of an industrial robot.

## Description

### Technical field of the invention

The present invention relates to a mounting aid arrangement for mounting a robot cable harness comprising at least one cable or hose, and a method for mounting a robot cable harness, comprising at least one cable or hose, inside a hollow part of an industrial robot.

### Background

For industrial robots a lot of cabling is required to be drawn from the base of the robot up to the tool at the end of the upper robot arm. The cabling can be drawn externally of the robot, or it can be drawn internally in some part of the robot. It can also be drawn inside special protective tubing, either externally or internally of the robot.

The cables and hoses of the cabling may for example be electrical cables, control cabling for connection to the control system, pneumatic or hydraulic hoses/pipes/tubes, tubes for welding gas etc. For example, for a spot welding robot, there can be as many as seven cables and four hoses. All these cables and hoses form a so called cable harness. Sometimes also the term dress pack is used for cables and hoses when they are grouped together.

According to prior art, the cables/hoses of a cable harness are drawn one by one when they are drawn through a robot part or a protective tubing. When a cable is drawn through e.g. a robot arm or a protective tubing there is friction against the interior of the arm or tubing and friction against other cables that are already present. Further, it is not only the cables and hoses that must move through the interior of the arm or tubing, but also the connectors at the ends of the cables and hoses. These connectors are often bigger than the cables/hoses and thus there is not much space left inside the arm or tubing, and often they also have projecting parts that makes the drawing of the cables more complicated.

An example of an internal routing way for a cable harness in a robot, such as a welding robot, is through the upper arm of the robot. After the harness leaves the upper arm it is led externally of the robot wrist or hand up to the tool. Since the wrist, the hand and the tool at the end of the robot arm move in several degrees of freedom, and therefore also the cables move during these movements, it is important that all the cables and hoses keep their relative positions and move in parallel with each other, all the way, without causing any crossing or torsion of the cables and hoses. This is e.g. important for the life expectancy of the robot. However, when the cables/hoses are drawn one by one inside the arm, or for example in a protective tubing, it is not possible to control that they keep their positions in relation to each other and that they keep their parallel arrangement.

### Summary of the invention

An object of the present invention is to remedy some of the above mentioned problems in relation to the installation of a robot cable harness on a robot.

Accordingly is defined a mounting aid arrangement for mounting a robot cable harness comprising at least one cable or hose, characterized in that the mounting aid arrangement comprises a pulling wire provided with an attachment device at a first end thereof for attachment to the robot cable harness, and a protection hose adapted to surround the robot cable harness. Through this is achieved the advantage that the protection hose will protect the cables/hoses from friction and facilitate the insertion through the robot part due to less friction. Moreover, the connectors of the cables/hoses will also be protected inside the protection hose and there will be less risk that the connectors get caught up inside the robot part. The mounting process of a cable harness in a robot is thus simplified, the risk of complications is reduced, and the required time is shortened, which leads to economic advantages.

According to one embodiment, the mounting aid arrangement may further comprise at least one securing member for securing several cables and/or hoses to each other, which cables and/or hoses form at least a part of the cable harness. Through this is obtained the advantage that more than one cable/hose can be mounted in the robot part at the same time, and the orientation of the cables/hoses in relation to each other can be maintained during the mounting process inside the robot part since the securing member or members will secure the cables/hoses to each other. The mounting process of a cable harness in a robot is thus simplified and the required time is shortened, which leads to economic advantages. Further, by making sure that the cables/hoses are arranged in parallel and not crossing each other when they are secured together, the mounting aid arrangement will also ensure that the cables/hoses are maintained in their positions during operation of the robot and this will provide for a longer life time of the cable harness, since it will be better equipped to sustain movement of the cables/hoses resulting from movement of e.g. a robot wrist or tool in several degrees of freedom.

According to another feature, the at least one securing member is incorporated in the attachment device by the attachment device being configured for attachment to several cables and/or hoses. This has the advantage that the securing function may be integrated in the attachment device. However, there may be other securing members arranged along the stretch of cables/hoses in order to ascertain that their relative orientation and positions are maintained during mounting of the cables inside the robot part.

According to one feature, the pulling wire is made of a flexible material in order to be easily insertable into and through the robot part. A certain rigidity or stiffness is also required in order to be able to steer the pulling wire through the interior of the robot part. A suitable material may be a plastic material, but also other materials that are both flexible and have the required stiffness are possible.

According to one feature, the protection hose is a made of a flexible material in order to be easy to mount over the cables/hoses and also to be easily insertable into the robot part. According to another feature, the protection hose may be made of plastic, but it may also be made of any other material that is found suitable. The protection hose may also be of a transparent material.

The mounting aid arrangement according to the invention also has the general advantage that it can be pre-installed on a cable harness already at the cable manufacturer. It also has the advantage of facilitating and economising when a spare part cable harness is to be installed, e.g. at a customer site.

According to another aspect of the present invention is defined a method for mounting a robot cable harness, comprising at least one cable or hose, inside a hollow part of an industrial robot, comprising:
- attaching an end of the cable harness to an attachment device at a first end of a pulling wire,
- mounting a protection hose over the cable harness such that it at least partly surrounds the same,
- attaching the protection hose to the pulling wire, and
- inserting the pulling wire through the hollow robot part and thereby pulling the cable harness through the hollow robot part.

This method displays advantages corresponding to the advantages described above in connection with the mounting aid arrangement. The protection hose may be mounted over the cable harness by being attachable to the first end of the pulling wire.

The method may further comprise inserting a second end of the pulling wire into the protection hose and pulling the protection hose over the pulling wire, before attaching the end of the cable harness to the attachment device. Thus the protection hose is mounted over the pulling wire, before the pulling wire is attached to the cable/hose.

The method may also comprise securing to each other several cables and/or hoses of the cable harness, by means of at least one securing member, prior to attaching an end of the cable harness to the attachment device at the first end of the pulling wire. By grouping together several cables and/or hoses of the cable harness and securing them to each other, the advantage is achieved that several cables/hoses can be drawn through the robot part at the same time, as has already been described above.

Finally, the method comprises the step of releasing the cable harness from the pulling wire. In an additional step the method may comprise removing the protection hose.

It should be noted that the term cable harness should be interpreted to encompass cable harnesses comprised of only one cable or hose, as well as cable harnesses comprising several cables and hoses.

Further features and advantages of the invention will also become apparent from the following detailed description of embodiments.

### Brief description of the drawings

A detailed description of the present invention and embodiments thereof, given as examples only, will now be made with reference to the accompanying drawings, in which:
Fig. 1 illustrates an example of a cable harness drawn through a robot part, in cross section,
Fig. 2 shows schematically an embodiment of a mounting aid arrangement according to the present invention,
Fig. 3 shows schematically an embodiment of a mounting aid arrangement according to the present invention, attached to a cable harness,
Fig. 4 shows schematically how a cable harness is drawn into a protection hose of a mounting aid arrangement according to the present invention, and
Fig. 5 shows schematically an embodiment of a mounting aid arrangement according to the present invention.

Elements that are the same or represent corresponding or equivalent elements have been given the same reference numbers in the different figures.

### Detailed description

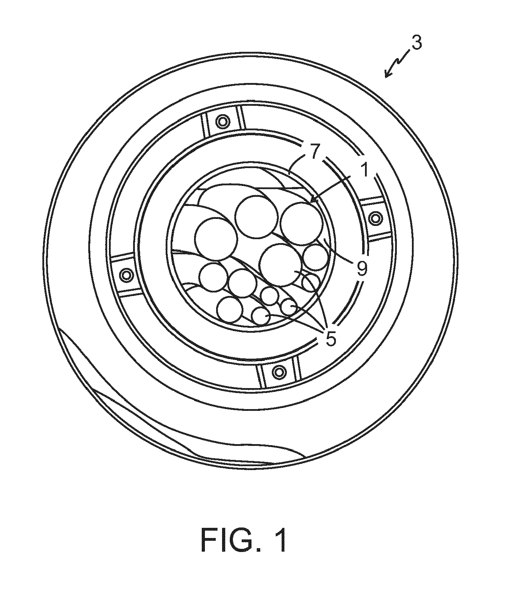

In Fig. 1 is illustrated an example, in cross section, of a cable harness 1 located inside a hollow part 3 of an industrial robot. In the illustrated case, the cable harness comprises a number of cables and hoses 5 that are drawn through a protective tubing 7, located inside the hollow interior 9 of the concerned robot part 3. The cables/hoses 5 may for example be electrical cables, control cabling for connection to the control system, pneumatic or hydraulic hoses/pipes/tubes, tubes for welding gas etc. as previously mentioned. For the sake of simplicity, in the following description only the word cable will be used for these cables or hoses. Commonly, the type of hollow robot part with an internal cable harness that is illustrated would be an upper robot arm having a hollow interior arranged to accommodate a cable harness. It should be mentioned that the protective tubing 7 could be omitted and the cable harness could be drawn inside the hollow robot part without any protective tubing. It is also possible that the hollow robot part could be only a protective tubing arranged externally on the robot.

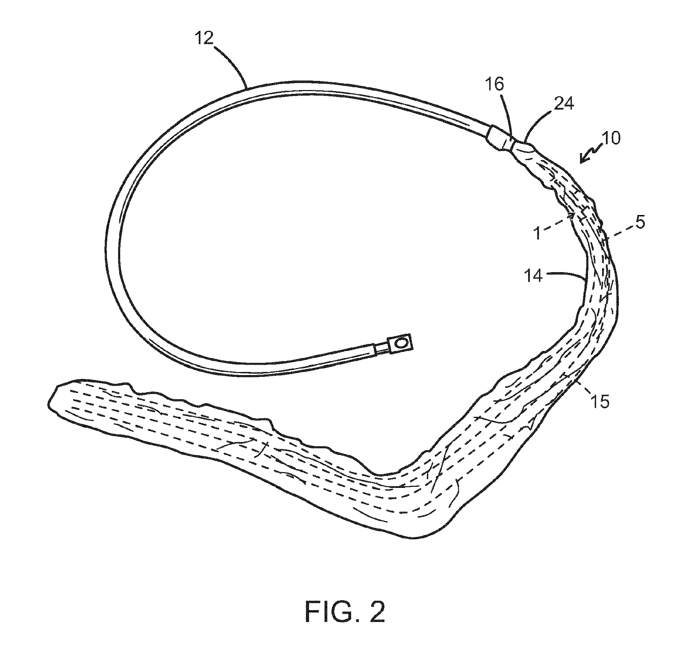

In Fig. 2 is schematically illustrated an embodiment of a mounting aid arrangement 10 for mounting a robot cable harness 1, according to the invention. The robot cable harness 1 comprises at least one cable 5. The mounting aid arrangement comprises a pulling wire 12 and a protection hose 14. The pulling wire 12 is provided with an attachment device 16 at a first end. By means of this attachment device 16, a cable 5 of the cable harness can be attached to the pulling wire 12. The protection hose 14 is attachable to the pulling wire at said first end and surrounds the cable harness 1 when the mounting aid arrangement is mounted on the cable harness.

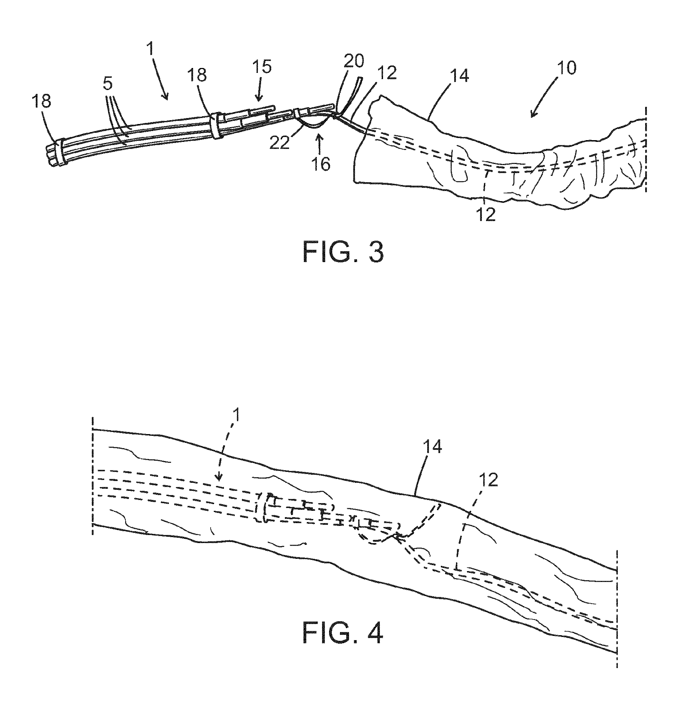

The cable 5 can also belong to a group 15 of cables that are secured together by means of at least one securing member 18, as shown in Figs. 3-4. The group of cables can form the entire cable harness or a part of the cable harness. By securing the cables 5 to each other, with the aid of the securing member 18, the cables are maintained in their relative positions and orientation in relation to each other, during the process of inserting the group of cables into the hollow robot part. The cables cannot cross each other and they are kept parallel even though the group of cables may twist and move during movement of e.g. a robot wrist with a tool to which the cables are connected.

In order to further secure the cables to each other, there may be additional securing members 18 applied to the group of cables further down along the cables. The securing member 18 can be very simple, e.g. just a simple band that is secured and tightened around the group of cables. However, the cables should be allowed to move slightly in their length direction, which is necessary when e.g. the robot wrist moves in different directions. Alternatively, it could be made more elaborated and e.g. include separate holding devices for each cable.

The attachment device 16 in the illustrated embodiment comprises a ring 20, at the end of the pulling wire 12, combined with a cable tie arrangement 22 by means of which the ring is attached to at least one cable 5. The cable tie arrangement 22 may comprise e.g. a cable tie attached around the cable end and another cable tie looped such that it attaches the cable tie around the cable end to the ring at the end of the pulling wire.

The pulling wire 12 is made of a flexible material that can flex but with sufficient stiffness to make it insertable into a hollow robot part. E.g. it can be made of metal or plastic.

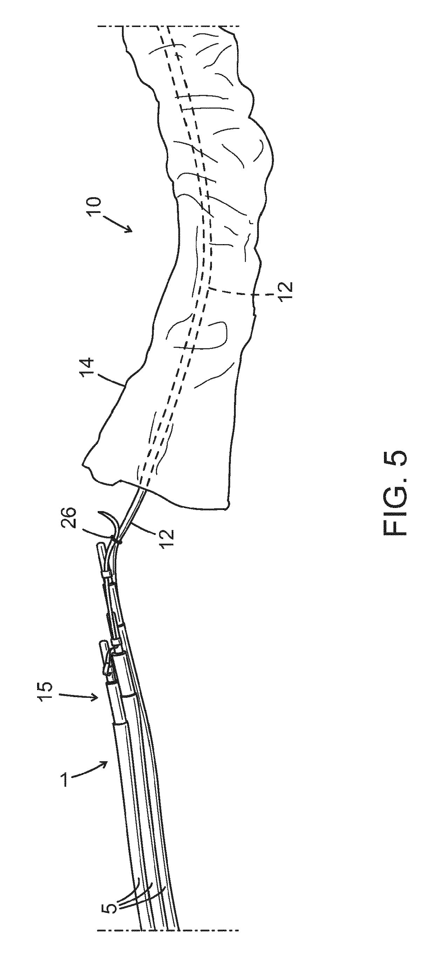

As shown in the illustrated embodiments, the protection hose 14 is designed to surround the cable/cables 5 of the cable harness 1 and protect them when they are inserted through the hollow robot part. The protection hose can initially be mounted slidably over the pulling wire 12, as shown in Figs. 3 and 5, and after the cable harness has been attached to the pulling wire, by means of attaching the end of at least one cable 5 to the pulling wire 12, the protection hose can be made to slide along the pulling wire and further onto the cable harness, as shown in Fig. 4, such that finally, the protection hose will surround and cover the cable/cables of the cable harness. The rear end 24 of the protection hose will then be secured to the end of the pulling wire 12 that is attached to the cable harness, see Fig. 2. This can for example be made by means of a cable tie. As an alternative, the protection hose 14 may be mounted directly over the cable harness without having been pre-mounted over the pulling wire. In that case, the protection hose should have a longitudinal slit in order to make it possible for it to be wrapped around the cable harness.

In Fig. 5 is illustrated an alternative embodiment in which a securing member is incorporated in the attachment device 26 by means of configuring the attachment device such that all of the cables 5 in a group 15 are attached to the attachment device.

The inventive method for mounting a robot cable harness 1 inside a hollow part 3 of an industrial robot, comprises
- attaching an end of a cable harness 1 to an attachment device 16; 26 at a first end of a pulling wire 12,
- mounting a protection hose 14 over the cable harness 1 such that it at least partly surrounds the same,
- attaching the protection hose 14 to the pulling wire 12, and
- inserting the pulling wire 12 through the hollow robot part 3 and thereby pulling the cable harness through the hollow robot part.

The above described method may involve the use of the described mounting aid arrangement 10. In Fig. 2 is illustrated a mounting aid arrangement 10 that has been mounted on a cable harness 1, and which is ready to be inserted into a hollow robot part. Initially, the pulling wire 12 will be inserted into the hollow robot part and then the cable harness 1 surrounded by the protection hose 14 will follow.

The method may also comprise inserting a second end of the pulling wire 12 into the protection hose 14 and pulling the protection hose over the pulling wire, before attaching the end of the cable harness to the attachment device 16.

According to one embodiment, the method also comprises securing to each other several cables and/or hoses 5 of the cable harness 1, by means of at least one securing member 18, prior to attaching an end of the cable harness to the attachment device 16; 26 at the first end of the pulling wire.

Finally, the method may comprise releasing the cable harness from the pulling wire 12, and then also removing the protection hose 14.

In the description above, the described group 15 of cables 5 may constitute an entire robot cable harness or the group may only constitute a part of a robot cable harness. If the group of cables only constitute a part of a cable harness, and the cable harness is constituted by several such groups of cables, each group of cables can be drawn by using the inventive cable harness mounting aid arrangement and the inventive method.

The invention shall not be considered limited to the illustrated embodiments, but can be modified and altered in many ways, as realised by a person skilled in the art, without departing from the scope defined in the appended claims.

## Claims

1. A mounting aid arrangement (10) for mounting a robot cable harness (1) comprising at least one cable or hose (5), **characterized in that** the mounting aid arrangement (10) comprises a pulling wire (12) provided with an attachment device (16; 26) at a first end thereof for attachment to the robot cable harness (1), and a protection hose (14) adapted to surround the robot cable harness (1).

2. The mounting aid arrangement according to claim 1, wherein it comprises at least one securing member (18) for securing several cables and/or hoses (5) to each other, which cables and/or hoses form at least a part of the cable harness (1).

3. The mounting aid arrangement according to claim 2, wherein the at least one securing member is incorporated in the attachment device (26) by the attachment device being configured for attachment to several cables and/or hoses (5).

4. The mounting aid arrangement according to any one of the preceding claims, wherein the pulling wire (12) is made of a flexible material.

5. The mounting aid arrangement according to any one of the preceding claims, wherein the pulling wire (12) is made of plastic.

6. The mounting aid arrangement according to any one of the preceding claims, wherein the protection hose (14) is a made of a flexible material.

7. The mounting aid arrangement according to any one of the preceding claims, wherein the protection hose (14) is made of plastic.

8. A method for mounting a robot cable harness (1), comprising at least one cable or hose (5), inside a hollow part (3) of an industrial robot, comprising:
- attaching an end of the cable harness (1) to an attachment device (16; 26) at a first end of a pulling wire,
- mounting a protection hose (14) over the cable harness (1) such that it at least partly surrounds the same,
- attaching the protection hose (14) to the pulling wire (12), and
- inserting the pulling wire (12) through the hollow robot part (3) and thereby pulling the cable harness (1) through the hollow robot part.

9. The method according to claim 8, comprising inserting a second end of the pulling wire (12) into the protection hose (14) and pulling the protection hose over the pulling wire, before attaching the end of the cable harness (1) to the attachment device (16; 26).

10. The method according to any one of claims 8-9, comprising securing to each other several cables and/or hoses (5) of the cable harness (1), by means of at least one securing member (18), prior to attaching an end of the cable harness (1) to the attachment device (16; 26) at the first end of the pulling wire.

11. The method according to any one of claims 8-10, comprising releasing the cable harness (1) from the pulling wire (12)

12. The method according to claim 11, comprising removing the protection hose (14).
